# EUROPEAN PATENT APPLICATION

(11) **EP 1 369 041 A1**
(43) Date of publication of application: **10.12.2003**
(21) Application number: 02077220.8
(22) Date of filing: 07.06.2002
(51) Int. Cl.: A23C 9/154, A23C 9/13, A23L 1/035

(54) **Gelatine free dairy dessert**

(71) Applicant: Campina B.V., 5301 LB Zaltbommel (NL)
(72) Inventor: Stenhouwer, Floris, 5211 AD Den Bosch (NL); Knip, Jacob, 3445 DB Woerden (NL)
(74) Representative: Wittop Koning, Tom Hugo

(57) **Abstract**

Described is a gelatine free dairy dessert, comprising less than 10%w/w fat and an unsaturated emulsifier. The unsaturated emulsifier confers optimal texture, mouthfeel and processability to the dessert without the need for gelatin. Further, a composition for use as gelatin replacer comprising an unsaturated emulsifier, a spray drying aid and a filling agent, and a method for the preparation thereof are described.

## Description

The invention relates to a gelatine free dairy dessert, to a composition for use as a gelatine replacer, in particular in dairy desserts and to a method for the preparation of such a composition.

Dairy desserts are often complicated mixtures comprising a water phase, wherein solid and liquid components are mixed, dissolved and/or dispersed. In the desserts, structuring the water phase is essential for the dessert to obtain the desired mouthfeel, flavour, taste and appearance. Structuring the water phase is often accomplished with gelatine. The advantage of gelatine is the fact that is has good cold setting properties and a unique melting behaviour in that it gels rather slowly on cooling, having a low viscosity, resulting in good processability at low temperatures. Gelatine is also shear resistant: even after being subjected to high shear forces, e.g. during the preparation process, gelatine retains its gelling capacity. Thus, gelatine is particularly useful for use in desserts.

However, gelatine is a hydrolysis product of collagen, the major intercellular protein found in the connective tissues of animal skins and bones. The animal origin of gelatine is a major disadvantage, rendering the use thereof undesired for e.g. vegetarian diets and might violate certain religious food rules. The main disadvantage however is the risk of contamination of gelatine containing food products with animal diseases, in particular since the outbreak of bovine spongiform encephalitis (BSE). In the art, several attempts have been made to replace collagen and gelatin in food products.

WO 98/34499 describes the replacement of gelatine by a mixture of agar and galactomannans. EP 0 949 295 describes a composition for gelatine replacement, comprising wheat fibres and modified starch. WO 00/36930 describes a hydrocolloidal gelling composition comprising alginate and galactomannans, whereas US 6,093,439 describes a viscosifier for cultured dairy products, comprising a starch composition. However, the above-mentioned gelatine replacement compositions that are based on a plurality of different hydrocolloids, have the disadvantage that gelling takes place fast at low temperatures, therewith rendering the product badly processable at temperatures in the range of 5-20°C, required for processing of dairy products, in particular dairy desserts. Also, the onset of gelation of many hydrocolloids is at a higher temperature (e.g. 40°C) than gelatine (approx 15°C). Further, the shear resistance of the above-mentioned hydrocolloids is substantially lower than that of gelatine; in order to compensate for the loss of texture induced by shear, the hydrocolloids have to be added in high amounts resulting in a negative effect on the taste of the food product and conferring thereto a sticky and unpleasant mouthfeel. Further, the above hydrocolloids loose a substantial portion of their gelling properties when subjected to high shear forces, therewith limiting the processability of the food products comprising said hydrocolloids. Thus, there is great need for gelatine free dairy desserts, comprising an alternative and improved gelatine replacer.

It is important to note that gelatine is in particular useful as e.g. gelling agent in low fat food products, i.e. comprising less than 10 w/w% fat, in particular less than 5 w/w% fat. In food products of a relatively high fat content in the range of 30 w/w% or higher, such as high fat spreads, e.g. margarine, the role of the gelling agent is however of less importance, as the fat itself plays an important role in conferring the proper consistency to the product.

The invention now provides a novel gelatine free dairy dessert, comprising less than 10 w/w% fat and an unsaturated emulsifier.

The term "dairy dessert" is understood to comprise dessert products, based on dairy products, in particular neutral and acid desserts, such as mousses, creme liégeoise, yogurt, pudding, creme dessert and custard creme, bavaroise (Bavarian cream), quark, heat treated yoghurt or quark, flan, vla, etc.

The term "unsaturated emulsifier" is known in the art. Such emulsifiers are derived from unsaturated fats and constitute of a mixture of mono- and diglyceride glycerol esters of unsaturated fatty acids, also referred to as mono- and diglycerides, respectively. Examples of commercially available unsaturated emulsifiers are e.g. the emulsifiers Dimodan RT, P Pel B, U/J, UP/B, S, OT Pel and LS of Danisco, Denmark, Grinsted Mono Di SL60 of Danisco, Denmark, Palsgaard 0094, 0095, 0098 and 0291 of Palsgaard, Denmark and Myverol 18-35K, 18-92K and 18-50XL PL of Quest, the Netherlands. According to the invention, both cis- and trans- unsaturated emulsifiers, or a combination thereof can be used.

It has surprisingly been found that replacement of gelatine by an unsaturated emulsifier, optimal melting behaviour and shear resistance are obtained, that are comparable with those, conferred by gelatine.

The gelatine free dairy dessert according to the present invention preferably comprises 8 w/w% or less, more preferably 7% or less, most preferably 5% or less fat.

Preferably, the gelatine free dairy dessert according to the invention comprises 0,2-2,5 w/w%, preferably 0,6-2,5 w/w%, more preferably 0,8-2,5 w/w% and most preferably 1,0-2,0 w/w% unsaturated emulsifier. It has been found that within the above specified ranges, the required shear resistance and melting behaviour is obtained, resulting in a dessert product, having the required gelly texture and being well processable. The said unsaturated emulsifier preferably comprises unsaturated monoglycerides, as it is believed that the above improved qualities are mainly conferred by unsaturated monoglycerides. Based on the total weight content of emulsifier, the emulsifier preferably comprises 50-100 w/w%, more preferably 50-95 w/w% unsaturated monoglycerides, that may be in destilled form.

Preferably, the dessert comprises milk- and/or soy protein, preferably milk protein, preferably chosen from casein and caseinate; the milk protein can be added to the dessert, but may also be an intrinsic component of the dessert. Other suitable milk proteins are e.g. whey proteins. Milk protein and also soy protein facilitates spray drying which is advantageous for the preparation of an emulsifier composition that can be spray dried and used as ingredient for the preparation of the dessert. Such composition is further discussed below.

The dessert according to the invention preferably has a pH between 3.8-7.5, the usual range for acid and neutral dessert products.

Preferably, the dessert according to the invention comprises 0-15 w/w% carbohydrate. The carbohydrate is preferably chosen from the group, consisting of glucose, glucose solids (e.g. glucose syrup), sucrose, fructose, maltodextrins, lactose, starch, modified starch, artificial starch or a combination of two or more thereof. Cellulose and inulin are also suitable. It has been found that by incorporation of carbohydrates, the water binding properties and the mouthfeel of the dessert are improved. Carbohydrates therefore have an important role as filling agent. Incorporation of carbohydrates also confers an attractive taste to the dessert. In addition, artificial sweeteners, such as Aspartam may be added to improve the taste, if necessary.

In order to further optimise the mouthfeel of the dessert according to the present invention, the dessert preferably comprises a hydrocolloid, preferably in the range of 0-10 w/w. Any hydrocolloid, suitable for incorporation in a dairy dessert can be used; such hydrocolloids are known in the art. Examples thereof are alginate, pectin, carrageenan, starch, modified starch, carboxymethyl cellulose, galactomannans, such as guar gum and locust bean gum.

The hydrocolloid may have properties of a thickening agent, therewith preventing syneresis and phase separation, improving stability and providing body and mouthfeel to the products.

In a preferred embodiment, the dessert according to the invention is an aerated dessert. The term "aerated" means that the dessert is expanded in volume by the incorporation of gas, in particular nitrogen or air. This can be achieved by beating, whipping, aerating or by subjecting the dessert formulation to the action of a propellant, e.g. by incorporating the dessert formulation in an aerosol. Examples of such products are mousses and cremes, such as creme liègeoise, vanilla mousse, chocolate mousse, decoration cream, Bavarian cream, yoghurt mousse, quark mousse. It has been found that optimal stability of such aerated desserts is provided by replacement of the gelatine by the unsaturated emulsifier according to the present invention, optionally combined with a hydrocolloid, such as outlined above. However, the dairy dessert according to the present invention may also be non-aerated; in non-aerated desserts, incorporation of the unsaturated emulsifier according to the invention confers an attractive texture to the dessert, comparable with that obtained by gelatine.

The invention further relates to a composition for use as a gelatine replacer, in particular in dairy desserts, comprising 4-100 w/w% unsaturated emulsifier, 1-30 w/w% spray drying aid, 3-90% filling agent and optionally 0-96 w/w% hydrocolloid. The composition can be used as ingredient in the preparation of a gelatine free dairy dessert according to the invention. As spray drying aid, preferably milk- and/or soy protein is used, preferably milk protein, such as caseinate is used, although any food grade spray drying aid, known in the art can be used. The filling agent preferably comprises carbohydrates as outlined above, that also may function as sweetening agent; however, any food grade filler can be used. The filler confers improved mouthfeel and melting behaviour to the dessert; in case a hydrocolloid is incorporated, additional improvement to the mouthfeel may be obtained. Optionally the composition also comprises 0-50 w/w% fat, preferably chosen from milk fat, butter fat, and vegetable fat, or a combination thereof.

Preferably, the composition according to the invention comprises:
20-70 w/w%, preferably 30-50 w/w%, unsaturated emulsifier
2-10 w/w%, preferably 4-8 w/w%, milk- and/or soy protein, preferably milk protein, more preferably comprising caseinate, and
20-78 w/w%, preferably 42-66 w/w% carbohydrate.

In an attractive embodiment, the composition according to the invention further comprises
0-50 w/w%, preferably 5-25 w/w%, hydrocolloid, chosen from carrageenan, guar gum, carboxymethyl cellulose, pectin, alginate and modified starches,
0-50 w/w%, preferably 5-25 w/w%, fat, chosen from milk fat, butter fat and vegetable fat,
0-40 w/w%, preferably 5-20 w/w%, additional emulsifier, chosen from saturated and unsaturated emulsifiers or a mixture thereof.

Examples of saturated emulsifiers are glycerol monostearate, glycerol monopalmitate, lactic acid esters of monoglycerides, acetic acid esters of monoglycerides, citric acid esters of monoglycerides, di-acetyltartaric acid esters of monoglycerides and polyglycerol esters. Examples of unsaturated emulsifiers are given above. The incorporation of said emulsifiers is in particular advantageous in aerated desserts for optimising the bubble size therein.

The invention further relates to a method for the preparation of the composition according to the invention comprising the steps of:
a) preparing a liquid fat phase comprising the unsaturated emulsifier and, if present, the fat,
b) preparing a water phase comprising the filling agent, the spray drying aid being comprised in the liquid or the fat phase or both,
c) combining the fat phase of a) with the water phase b), and optionally
d) homogenising the mixture of c), and/or, optionally,
e) spray drying the homogenate of d).

The emulsifier, and, if present, the fat, can be combined with the water phase in liquid form, e.g. by providing the emulsifier, and, if present, the fat in melted form. The spray drying aid preferably comprises milk- and/or soy protein, whereas the filling agent preferably comprises carbohydrates, as explained above.

The spray drying aid can be added to the liquid or the fat phase or to both; the skilled person will be able to determine to what phase the spray drying aid can advantageously be added; however, e.g. milk protein can be added to any of the said phases with a slight preference for the water phase.

According to the method, the composition according to the invention can be obtained in liquid or in dry form. The optional spray drying is preferred in order to obtain a powdered product that can be added in the recepe of the dessert during the preparation thereof. However, the composition can also be added in liquid form. Homogenation is optional but may be preferred, depending on the composition and dessert to be prepared therewith.

In case hydrocolloids are incorporated in the composition, said hydrocolloids can be co-spray dried or added to the composition after spray drying or be incorporated in the composition before spray drying, i.e. in the water phase.

The invention will now be further illustrated by way of nonlimiting examples.

### EXAMPLES

### 1. Preparation of gelation replacer composition (composition A )

### 1.1 Recipe

| | |
|---|---|
| Glycodry 330 ¹ (glucose solids) | 64.00 % |
| Dimodan RT or P Pel B ² (emulsifier) | 30.00 % |
| Na-caseinate EM7 ³ (milk protein) | 6.00 % |

| | |
|---|---|
| 1 Amylum Group, Belgium | |
| 2 Daniso Cultor, Denmark | |
| 3 DMV International, The Netherlands | |

Optionally, other ingredients can be co-spray dried. The weight percentages are based on the total weight of the composition.
- 0-50 w/w% Hydrocolloids (carrageenan, guar gum, CMC, xanthan gum, modified starches, pectin, alginate)
- 0-50 w/w% Milk fat or vegetable fat (hardened palm kernel oil, hardened coconut oil)
- 0-40 w/w% Other emulsifiers, saturated and/or unsaturated such as mono- and diglycerides or mixtures thereof, as identified above.

### 1.2 Processing

The fat phase comprises the Na-caseinate and the emulsifier (Dimodan RT). The Na-caseinate is dispersed into the melted emulsifier (Dimodan RT) at 75°C.

The water phase comprises water and glucose solids (glucose syrup).

At 75°C, the fat phase and the water phase are combined under vigorous stirring. The mixture is subsequently homogenized at 75°-80°C (150/200 bar) and spray dried.

The mixture before drying has a total solids content of ± 60% w/w. The spray dried powder has a water content of approximately 0-4% w/w.

### 2. Preparation of chocolate mousse based on composition A

### 2.1 Recipe

| | |
|---|---|
| Milk (3.5% fat) | 75.90 % |
| Sugar | 12.00 % |
| Real chocolate | 5.00 % |
| Cocoa powder ¹ | 3.80 % |
| Composition A ² | 3.30 % |

| | |
|---|---|
| 1 D11S, ADM Cocoa, The Netherlands | |
| 2 DMV International, The Netherlands | |

Optionally, 0-10 w/w%, based on the total weight of the dessert, hydrocolloids (carrageenan, pectin, alginate, guar gum, CMC, modified starches) can be added.

### 2.2 Processing

- Dissolve the dry ingredients into the cold milk and stir the mixture for at least ½ hour.
- Heat to ± 40°C and add the real chocolate.
- Apply upstream homogenization at 70°C (100/0 bar) (optional)
- Pasteurize 5'/85°C, or 2-10 s UHT treatment at 135-145°C.
- Cool to 10-15°C and whip on a continuous aerator (e.g. a Monomixer from Monomix, the Netherlands) to an overrun of 70-150%. Speed mixing head: 200-600 rpm; system pressure 1-3 bar. Nitrogen was applied as aeration gas.
- Fill cups and store at 5°C.

### 2.3 Characteristics

The gel strength of the mousse obtained from recipe 2.1 was measured using a Stevens Texture Analyzer (distance 25 mm, speed 2 mm/s), after 48 hours at 5°C. Loads [g] ranged from 30-90 grams. For these measurements, a cylinder-shaped geometry was used, having a diameter of 12,0 mm, a height of 35 mm and a weight of 6.20 g.

### 3. Preparation of vanilla mousse based on composition A

### 3.1 Recipe

| | |
|---|---|
| Skimmed milk | 71.95 % |
| Cream (40% fat) | 12.50 % |
| Sugar | 10.00 % |
| Composition A¹ | 5.00 % |
| Satiagel DF52 ² (carrageenan) | 0.20 % |
| CL 355 ³ (carrageenan) | 0.20 % |
| Vanilla flavour ⁴ | 0.15 % |

| | |
|---|---|
| 1 DMV International, The Netherlands | |
| 2 Degussa Texturant Systems, Belgium | |
| 3 Danisco Cultor, Denmark | |
| 4 15.02.4842, IFF, The Netherlands | |

Optionally, 0-10 w/w% hydrocolloids (carrageenan, guar gum, pectin, alginate, CMC, modified starches) can be added.

### 3.2 Processing

The processing is identical to that of example 2.2 above.

### 3.3 Characteristics

The gel strength of the mousse obtained from recipe 3.1 was measured according to example 2.3.

### 4. Preparation of demouldable pudding based on composition A

### 4.1 Recipe

| | |
|---|---|
| Milk (1.5% fat) | 77.15 % |
| Sugar | 11.00 % |
| Cream (40% fat) | 4.45 % |
| C*gel 70001 ¹ (native starch) | 2.40 % |
| Composition A ² | 5.00 % |

| | |
|---|---|
| 1 Cerestar, The Netherlands | |
| 2 DMV International, The Netherlands | |

Optionally, 0-10 w/w% hydrocolloids can be added (carrageenan, guar gum, pectin, alginate,CMC, modified starches).

### 4.2 Processing

- Dissolve the dry ingredients into the cold milk + cream. Stir for at least ½ hour.
- Apply upstream homogenization at 60°C (100/0 bar) (optional).
- Heat to 90°C and hold for 20 minutes.
- Cool to 70°C and fill / Cool to 20°C and fill aseptically.
- Store cups at 5°C.

### 4.3 Characteristics

Gel strength of the pudding obtained from recipe 4.1 was measured according to example 2.3.

### 5. Gelatin containing demouldable vanilla pudding

### 5.1 Recipe

| | |
|---|---|
| Milk (1.5% fat) | 84.10% |
| Saccharose | 12.00% |
| Modified starch¹ | 2.00% |
| Starch² | 0.50% |
| Gelatin 270 bloom³ | 1.20% |
| Stabiliser⁴ | 0.20% |
| Coluring | + |
| Flavouring | + |

| | |
|---|---|
| 1 C^{*}Polar Tex 06719, Cerestar, The Netherlands | |
| 2 Waxy maize 04201, Cerestar, The Netherlands | |
| 3 PB Gelatins, Belgium | |
| 4 Carrageenan LP60, Degussa Texturant Systems, Belgium | |

### 5.2 Processing

- Mix the stabilizers with the other powder components and dissolve into the milk.
- Pasteurize: 20 min.92°C.
- Cool rapidly to 70 °C for hot filling or cool down to approx. 20°C.
- Fill cups, cool product to 5°C and store at 5°C.

### 6. Gelatin free yogurt mousse

### 6.1A Recipe A

| | |
|---|---|
| Milk (3.5% fat) | 68.00 % |
| Cream 40% fat | 4.00 % |
| Saccharose | 8.00 % |
| Skimmed milk powder | 1.00 % |
| Yoghurt culture ¹ | + |

| | |
|---|---|
| 1 yoghurt-culture YC 380, Chr. Hanssen, Denmark | |

### 6.1B Recipe B

| | |
|---|---|
| Water | 10.00 % |
| Composition A ² | 5.00 % |
| Sugar | 4.00 % |

| | |
|---|---|
| 2 DMV International, The Netherlands | |

### 6.2A Processing A

- Dissolve sugar, skimmed milk powder and cream into the milk at 10-40°C
- Heat till 65 °C.
- Homogenise: 65 °C, 200/0 bar.
- Pasteurise: 6 min. 95°C.
- Cool down to fermentation temperature of 32°C
- Add culture
- Incubate until final pH is reached, approx. pH 4,50

### 6.2B Processing B

- Dissolve sugar and Composition A in water
- Pasteurise mixture 5 min. at 85°C
- Cool to approx. 30°C
- Recipes A and Recipe B are mixed for at least 15 min.
- Cool mixture to 10-15°C
- Whip with a continuous aerator to an overrun of 70-120%
- Fill cups and store at 5°C.

### Comparative examples

### C1. Gelatin containing chocolate mousse

### C1.1 Recipe

| | |
|---|---|
| Milk (3.5% fat) | 72.80% |
| Saccharose | 12.00% |
| Chocolate | 5.00% |
| Whipping base DP73 ¹ | 5.00% |
| Cocoa powder² | 3.80% |
| Gelatin 260 bloom ³ | 1.20% |
| Stabiliser ⁴ | 0.20% |

| | |
|---|---|
| 1 DMV International, The Netherlands | |
| 2 D-11-S ADM Cocoa, The Netherlands | |
| 3 PB Gelatins, Belgium | |
| 4 Satiagel ADG 14, Degussa Texturant Systems Benelux BV, Belgium | |

### C1.2 Processing

- Mix the stabilizers with the other powder components and dissolve into the milk.
- Heat to about 50 °C.
- Melt the real chocolate and add to the mixture.
- Pasteurize: 5 min., 85°C.
- Homogenize: 75°C, 100 bar.
- Cool rapidly to 10-15 °C.
- Whip on a continuous aerator to an overrun of approx. 100%.
- Fill cups and store at 5°C.

### C2. Gelatin containing vanilla mousse

### C2.1 Recipe:

| | |
|---|---|
| Skimmed milk | 67.30 % |
| Dairy cream, 38% fat | 18.50 % |
| Sugar | 12.00 % |
| Cremodan®Mousse 34 ¹ | 2.20 % |
| (emulsifier + gelatin) | |
| Vanilla flavouring | + |
| Colour | + |

| | |
|---|---|
| 1 Danisco Cultor, Denmark. | |

### C2.2 Processing:

- Mix the stabilizers with the other powder components and dissolve into the milk.
- Pasteurize: 5 min., 85°C.
- Homogenize: 75°C, 100 bar.
- Cool rapidly to 10-15 °C.
- Whip on a continuous aerator to an overrun of approx. 100%.
- Fill cups and store at 5°C.

### C3. Gelatin free chocolate mousse

### C3.1 Recipe

| | |
|---|---|
| Cream (40% fat) | 14.0-15.0 % |
| Sugar | 10.0-14.0 % |
| Cocoa powder | 5.0 % |
| Skimmed milk powder | 4.0 % |
| Protanal® XP 3505 alginate ¹ | 0.4-0.6 % |
| Lactogel ® FC 3263 carrageenan 1 | 0.25-0.35 % |
| Lactic acid ester of mono & diglycerides | 0.5 % |
| Full fat milk to | 100 % |

| | |
|---|---|
| 1 FMC BioPolymer, Belgium | |

### C3.2 Processing

- Blend milk and cream and pre-heat to 75-80°C
- Dry blend all solids and disperse in the milk under medium agitation
- Homogenize at 75°C (200 bar)
- Apply UHT treatment at 135-140 °C for 4-10 sec.
- Cool mix to 10-15 °C and whip to desired overrun with a Mondomixer® or similar.
- Fill and store at 5°C.

The sensoric evaluation of the products as described in the above examples is summarized in table 1 below.

**Table 1.**

| | Chocomousse | | | Vanilla mousse | | Demouldable Pudding | |
|---|---|---|---|---|---|---|---|
| Example nr. | C1 | C3 | 2 | C2 | 3 | 5 | 4 |
| Load (g) | 59-64 | 63-69 | 76-79 | 51-52 | 35-38 | 68-75 | 53-55 |
| Sensoric evaluation | Pleasan tly melting, creamy, not sticky, spoonable. | Sticky mouth-feel, heavy, spoonable. | Creamy not sticky , light, spoonable. | Pleasan tly melting, not sticky, spoonable. | Creamy, not sticky, spoonable, light. | Smooth, creamy, not sticky, spoonable | Soft, creamy, slightly spoonable. |

The table shows that an excellent dessert can be obtained using the composition of the invention, with good mouthfeel and melting properties. The firmness of the dessert can be modified by adjusting the dosage of the composition. E.g. in the case of the vanilla mousse, raising the amount of composition will result in a higher load.

## Claims

1. Gelatine free dairy dessert, comprising less than 10% w/w fat and an unsaturated emulsifier.

2. Dessert according to claim 1, comprising 0,2-2,5 w/w%, preferably 0,6-2,5 w/w%, more preferably 0,8-2,5 w/w% and most preferably 1,0-2,0 w/w% unsaturated emulsifier.

3. Dessert according to claim 1 or 2, wherein the emulsifier, based on the total weight content of emulsifier, comprises 50-100 w/w%, preferably 50-95 w/w% unsaturated monoglycerides.

4. Dessert according to any of the preceeding claims, comprising 0-10 w/w% milk- and/or soy protein, preferably milk protein, most preferably chosen from casein and caseinate.

5. Dessert according to any of the preceding claims, wherein the dessert comprises 0-15 w/w% carbohydrate, preferably chosen from the group, consisting of glucose, glucose solids, sucrose, fructose, maltodextrins, lactose, starch, modified starch, artificial starch or a combination of two or more thereof.

6. Dessert according to any of the preceeding claims, wherein the dessert comprises a hydrocolloid, preferably in the range of 0-10 w/w%.

7. Dessert according to claim 6, wherein the hydrocolloid is chosen from the group, consisting of galactomannans, carrageenan, carboxymethylcellulose, starch, modified starch or a combination of 2 or more thereof.

8. Dessert according to any of the preceding claims, wherein the dessert is an aerated dessert.

9. Composition for use as a gelatin replacer, in particular in dairy desserts, comprising 4-100 w/w% unsaturated emulsifier, 1-30 w/w% spray drying aid and 3-90 w/w% filling agent.

10. Composition according to claim 9, wherein the composition comprises:
20-70 w/w%, preferably 30-50 w/w%, unsaturated emulsifier,
2-10 w/w%, preferabley 4-8 w/w% milk- or soy protein, preferably milk protein, most preferably comprising caseinate, and
20-78 w/w%, preferably 42-66 w/w% carbohydrates.

11. Composition according to claim 9 or 10, further comprising:
0-50 w/w%, preferably 0-25 w/w% hydrocolloids, chosen from carrageenan, guar gum, carboxymethyl cellulose, modified starches, pectin and alginate,
0-50 w/w%, preferably 0-25 w/w% fat, chosen from milk fat, butter fat and vegetable fat, and
0-40 w/w%, preferably 5-20 w/w% additional emulsifier, preferably comprising saturated emulsifier.

12. Composition according to any of the claims 9-11, the composition being spray dried.

13. Method for the preparation of the composition according to any of the claims 9-12, comprising the steps of :
a) preparing a liquid fat phase comprising the unsaturated emulsifier and optionally the fat,
b) preparing a water phase comprising the filling agent, the spray drying aid being comprised in liquid or fat phase or both,
c) combining the fat phase of a) and the water phase b), and, optionally,
d) homogenising the mixture of c), and/or, optionally,
e) spray drying the homogenate of d).
